# EUROPÄISCHE PATENTSCHRIFT

(11) **EP 4 313 725 B1**
(45) Veröffentlichungstag und Bekanntmachung des Hinweises auf die Patenterteilung: **15.07.2026**
(21) Anmeldenummer: 22711997.1
(22) Anmeldetag: 11.03.2022
(51) Int. Cl.: B62D 1/04, B60K 37/00

(54) **LENKHANDHABE MIT BEDIENEINHEIT**
STEERING CONTROLLER WITH OPERATING UNIT
DISPOSITIF DE COMMANDE DE DIRECTION COMPRENANT UNE UNITÉ DE COMMANDE

(30) Priorität: 26.03.2021 DE 102021107761
(43) Veröffentlichungstag der Anmeldung: 07.02.2024
(73) Patentinhaber: Küster Holding GmbH, 35630 Ehringshausen (DE)
(72) Erfinder: SCHMIDT, Thomas, 35630 Ehringshausen (DE); BLÜCHER, Martin, 35630 Ehringshausen (DE); MEDEBACH, Steffen, 35582 Wetzlar (DE)
(74) Vertreter: Weckenbrock, Matthias
(86) Internationale Anmeldenummer: PCT/EP2022/056294
(87) Internationale Veröffentlichungsnummer: WO 2022/200076

(56) Entgegenhaltungen:
- DE-A1- 19 739 626
- US-A1- 2015 344 059
- US-B1- 10 647 344

## Beschreibung

Die Erfindung betrifft eine Lenkhandhabe mit Bedieneinheit nach dem Oberbegriff des Anspruchs 1.

Die erfindungsgemäße Lenkhandhabe mit Bedieneinheit kann zur Bedienung von technischen Einrichtungen in Fahrzeugen eingesetzt werden.

Beispielsweise bei modernen Kraftfahrzeugen können mehrere Funktionalitäten durch ein einzelnes Steuergerät oder eine zentrale Prozessoreinrichtung bereitgestellt sein. Im Zusammenhang mit dem Infotainment wird eine solche zentrale Prozessoreinrichtung als Infotainmentsystem bezeichnet. Dieses stellt beispielsweise als Funktionalitäten eine Navigationsassistenz, eine Medienwiedergabe und Telefonie bereit. Jede dieser Funktionalitäten wird durch dafür vorgesehene Steuermodule bereitgestellt. Jedes Steuermodul lässt sich dabei mit derselben Bedienvorrichtung bedienen, beispielsweise einem Drehsteller oder einem Dreh-Drück-Steller. Ein solcher Drehsteller kann einen Bedienknopf aufweisen, der sich um eine Drehachse drehen lässt.

Weitere solcher Funktion können insbesondere Einstellungen zur Fahrdynamik, bspw. spezielle Fahrmodi, wie "Eco", "Sport" oder "Komfort" oder ein fahrzeugeigenes Komfortsystem betreffen, wie ein Klimasystem zur Temperatur- und/oder Lüftungseinstellung, ein Audiosystem, bspw. Lautstärkeregelung, ein Kommunikationssystem mit Auswahl und Anwahl von Kontakten, ein Navigationssystem mit Auswahl von Zielen oder ein Bordsystem, beispielsweise mit Aktivierung von bestimmten Meldungen.

Auch sind haptische Bedieneinrichtungen bekannt, bei der die Dreheinheit eine Anzeigeeinheit wenigstens abschnittsweise oder auch vollständig umgibt.

Aus der DE 10 2009 023 138 A1 ist eine Bedienvorrichtung mit einem Drehsteller für eine Zwei-Zonen-Klimaregelung in einem Kraftfahrzeug bekannt.

Aus der DE 103 42 666 DE ist ein Bediensystem für ein Fahrzeug bekannt, die eine optische Anzeigeeinheit zur Darstellung mindestens einer Funktion und mindestens ein Betätigungsmittel umfasst, das zur Bedienung der mindestens einen dargestellten Funktion der optischen Anzeigeeinheit zugeordnet ist.

Aus der DE 10 2009 052 928 A1 ist ebenfalls ein Dreh-Drück-Steller bekannt, mit dem ein Bedienmenü eines Infotainmentsystems bedient werden kann. Um zwischen Steuermodulen umzuschalten, sind neben dem Dreh-Drück-Steller weitere mechanische Bedienknöpfe zum Auswählen eines Steuermoduls bereitgestellt.

Aus der US 10 647 344 B1 ist eine Multifunktions-Eingabevorrichtung eines Lenkrads bekannt, die ein äußeres Zifferblatt mit einer ebenen Oberfläche und ein mittleres Zifferblatt mit einer konvexen Oberfläche umfasst, sodass sich das mittlere Zifferblatt vom Lenkrad nach außen erstreckt.

Die DE 197 39 626 A1 betrifft ein Lenkrad für ein Kraftfahrzeug mit einem mittels Speichen an einer Nabe befestigten Lenkkranz und mit darauf angeordneten elektrischen Schaltern. Diese Schrift betrifft weiterhin eine Verwendung einer Innenseite eines Lenkkranzes und/oder von annähernd horizontalen Speichen eines Lenkrades eines Kraftfahrzeuges.

Aus der US 2015/344059 A1 geht ein Eingabesystem für ein Fahrzeug mit einem Lenkrad hervor, welches eine Eingabeeinheit mit mehreren Tasten aufweist, die im Lenkrad des Fahrzeugs angeordnet sind.

Nachteilig beim Stand der Technik ist, dass eine Vielzahl an Bedien- und Verstelleinrichtungen an unterschiedlichen Stellen im Fahrzeug vorgesehen sind, beispielsweise für die Bedienung der Navigation, des Infotainmentsystems, der Klimaautomatik oder zur Anwahl unterschiedlicher Fahrstufen oder Fahrmodi. Für die Bedienung dieser Verstelleinrichtungen während der Fahrt ist der Benutzer abgelenkt, da er sowohl eine Hand vom Lenkrad nimmt als auch in der Regel den Blick auf die Bedien- oder Verstelleinrichtung richtet und daher kurzzeitig abgelenkt ist.

Ausgehend von den zuvor beschriebenen Nachteilen liegt der Erfindung die Aufgabe zugrunde, eine intuitive und einfache Bedienung von Verstelleinrichtungen im Fahrzeug zu realisieren und die Anzahl der verteilt im Fahrzeug vorgesehene Bedien- und Verstelleinheiten zu reduzieren, indem unterschiedliche Bedien- und Verstelleinheiten zentral zusammengefasst werden.

Diese Aufgabe wird gelöst mit einer Lenkhandhabe mit Bedieneinheit nach Anspruch 1.

### Darstellung der Erfindung

Die Erfindung betrifft eine Lenkhandhabe zum Steuern eines Kraftfahrzeugs, insbesondere ein Lenkrad, mit einer Nabe zur Verbindung mit einer Lenkachse des Fahrzeugs und einem über mindestens einen als Speiche ausgebildeten Steg verbundenen Griffbereich und mit mindestens einer Bedieneinheit.

Erfindungsgemäß ist die Bedieneinheit zwischen Nabe und Griffbereich der Lenkhandhabe angeordnet und als Drehsteller zum Anwählen unterschiedlicher Wählpositionen ausgebildet, wobei den einzelnen Wählpositionen unterschiedliche Funktionen des Drehstellers zugeordnet sind.

Der Drehsteller kann in einer Aufnahme angeordnet sein und ein um eine Drehachse zwischen unterschiedlichen Wählpositionen drehbares Drehelement aufweisen.

Der Drehsteller wird in der Literatur auch Drehschalter oder Dreh-/Drücksteller genannt und er erzeugt bei Drehen des Bedienknopfes ein Stellsignal, so dass die durch die Wählposition des Bedienknopfes ausgewählte Funktion des Drehstellers ausgeführt wird.

Der erfindungsgemäße Drehsteller ist auch ohne direkten Blickkontakt gut greifbar und bedienbar und kann eine haptische Rückmeldung bieten. Die Drehsteller können kontinuierlich drehbar oder mit Raststellungen ausgebildet sein. Raststellungen lassen sich mechanisch oder elektromagnetisch erzeugen und bieten dem Nutzer eine haptische Rückmeldung für eine Änderung der Einstellung des Drehstellers. Zudem sind die Drehsteller mit oder ohne Anschläge, d.h. Drehwinkelbegrenzungen ausführbar.

Eine Nutzung eines im Bereich der Lenkhandhabe angeordneten Drehstellers oder Drehdrückstellers führt während der Fahrt in der Regel zu weniger Fehleingaben. Ferner sind bei Bedienungen durch den Fahrzeugführer während des Führens des Fahrzeugs geringere Spurabweichungen als bei einer Verwendung beispielsweise eines Touchscreens oder eines Touchpads zu beobachten.

Gemäß einer ersten vorteilhaften Ausgestaltung der Erfindung ist der Drehsteller zum Anwählen unterschiedlicher Fahrstufen ausgebildet. Die Drehbewegung des Drehstellers dient zur Anwahl der jeweiligen Fahrstufe (P, R, N, D). Auf diese Weise wird auch die Schaltfunktion im Bereich des Lenkrads realisiert und nicht, wie im Stand der Technik, im Bereich der Mittelkonsole. Der Fahrer ist durch diese intuitive Bedienung zur Auswahl unterschiedlicher Fahrstufen (P, R, N, D) weniger abgelenkt.

In einer vorteilhaften Weiterbildung der Erfindung ist die Bedieneinheit an der Nabe oder an dem die Nabe mit dem Griffbereich verbindenden Steg angeordnet. Auf diese Weise wird die Bedienung und die Anwahl der Wählpositionen weiter zentralisiert und für den Fahrer einfach bedienbar angeordnet.

Erfindungsgemäß ist vorgesehen, dass der Steg eine Aussparung aufweist, im Bereich welcher ein Betätigungselement des Drehstellers zu liegen kommt. Mittels des Betätigungselements wird der Drehsteller in eine Drehbewegung zum Anwählen der unterschiedlichen Wählpositionen versetzt. Das Betätigungselement ist als gegenüber dem Drehsteller nach außen abstehender bzw. hervorstehender Hebel ausgebildet.

Mit diesem Hebel wird der Drehsteller in Rotationsbewegung gebracht, beispielsweise zum Anwählen der Fahrstufen. Durch diese intuitive Handhabe ist eine sichere und einfache Bedienung realisiert.

Gemäß einer weiteren vorteilhaften Variante der Erfindung ist vorgesehen, dass der Drehsteller einen, vorzugsweise zentrisch im Drehsteller angeordneten Bedienknopfes zum Bestätigen der Parksperre in P-Stellung des Drehstellers aufweist. Dieser vorzugsweise als Drückknopf ausgebildete Bedienknopf dient zum Einlegen der Parksperre. Durch Drücken des Bedienknopfes wir die Betätigung des Parksperrenaktuators am Getriebe ausgelöst. Damit wird das Getriebe mechanisch gesperrt und ein Wegrollen des Fahrzeugs wird verhindert, beispielsweise wenn der Fahrer das Fahrzeug bei laufendem Motor verlässt.

Eine vorteilhafte Weiterbildung der Erfindung sieht vor, dass in dem Drehsteller und/oder im Anschlussbereich an die Nabe eine Anzeigeeinrichtung zur Visualisierung der einzelnen Fahrstufen (P, R, N, D) vorgesehen ist. Auf diese Weise wird dem Fahrer eine visuelle Rückmeldung über die aktuelle eingelegte Fahrstufe gegeben. Auch diese Anzeigeeinrichtung ist zentral im Blickfeld des Fahrers angeordnet, so dass er den Blick nicht zur Seite richten muss und dadurch abgelenkt wäre.

Gemäß einer weiteren Ausgestaltung weist der Drehsteller ein Display auf, vorzugsweise mit einer berührungssensitiven Oberfläche zur Anwahl weiterer Bedienfunktionen des Fahrzeugs.

Das Display kann als ein frei programmierbares LCD-(Liquid Crystal Display, Flüssigkeitsanzeige) oder TFT-(Thin Film Transistor, Dünnschichttransistor), OLED- oder Plasma- Display ausgebildet sein. Diese Anzeigen lassen sich flach ausführen, sind energiesparsam und können frei programmiert werden. Damit eignen sich diese Anzeigen insbesondere dann, wenn eine geringe Einbautiefe zur Verfügung steht, auf den elektrischen Energieverbrauch geachtet werden muss und das Anzeigebild flexibel sein soll. Auf dem Display kann ein Bedienmenü angezeigt werden, welches die Funktionen auflistet, die mit dem Bedienknopf beispielsweise durch Drehen desselben ausgewählt werden können.

Dies ist sehr vorteilhaft, da der Benutzer insbesondere direkt im Zentrum des Drehstellers das Display im Blick hat. Dadurch kann er beim Drehen des Drehstellers die sich ändernde Anzeige des Displays beobachten und muss seinen Blick nicht abschweifen lassen, um zu verfolgen, welche Auswirkungen das Bedienen des Drehstellers auf ein Kraftfahrzeug hat. Der Benutzer kann auch ohne zu der Bedieneinrichtung hinzusehen den Drehsteller drehen und diesen gegebenenfalls ohne Sichtkontakt bedienen und betätigen. Er hat aber jederzeit die Möglichkeit sich durch einen kurzen Blick zu vergewissern, in welcher Position sich der Bedienknopf gerade befindet bzw. was auf dem Display gerade dargestellt wird.

Beispielsweise kann bei Einsatz in einem Kraftfahrzeug nach dem Startvorgang ein Startmenü ("OFF- Infotainment-Zündung-Start") ausgeblendet werden, da dieses ja nicht mehr benötigt wird, solange das Fahrzeug fährt. Auch ist es bei selbstfahrenden Fahrzeugen denkbar, dass die Anzeige für den GearShifter während dem "autonomen Fahren" verschwindet oder die Gangschaltung usw. ausgeblendet wird. Beispielsweise könnte statt der Gangschaltung das Entertainment angezeigt werden oder andere Parameter, die für das Selbstfahren relevant sind, wie etwa Abstand, Ansprechverhalten der Sensoren oder Dergleichen.

Bei der berührungssensitiven Oberfläche des Displays kann es sich um einen Touchscreen handeln, der eine Fläche mit einer Vielzahl verschiedener Bedienfelder aufweist, denen jeweils zumindest eine Steuerfunktion zugeordnet ist. Über den Touchscreen können zusätzliche Funktionen bedient werden.

Bei den über das Display aus- oder anzuwählenden Funktionen kann es sich um ein Telefonmodul, ein Infotainmentsystem, ein Navigationssystem oder ein Element zur Bestätigung einer Eingabe handeln.

Auch kann alternativ oder zusätzlich zu einem Display mindestens ein farbiges Licht emittierendes Beleuchtungsmittel vorgesehen sein, wobei die Farbe des emittierten Lichts mittels einer Steuereinheit einstellbar ist. Der Drehsteller kann hinterleuchtet sein und/oder mit hinterleuchteten Markierungen oder Symbolen versehen sein. Es ist auch denkbar, im Inneren des Drehstellers Lichtleitelemente vorzusehen, welche das Licht von beispielsweise auf einer Leiterplatte angeordneten Lichtquellen zum Bedienknopf leiten. Die Farbe des Beleuchtungsmittels kann in Abhängigkeit von der Einstellung des Bedienknopfes durch eine Steuereinheit einstellbar sein.

Durch die erfindungsgemäße Ausgestaltung kann mit einem Minimum an Platzbedarf eine Vielzahl von Zuständen dargestellt werden. Durch die Farbe des emittierten Lichts erhält der Benutzer die Information über die Funktionen oder die Einstellungen des Drehstellers. Vorzugsweise ist die Farbe des emittierten Lichts des Beleuchtungsmittels kontinuierlich oder quasi-kontinuierlich veränderbar. Als Beleuchtungsmittel kommt insbesondere eine mehrfarbige Leuchtdiode zum Einsatz. Solche zwei- bzw. dreifarbige Leuchtdioden, bei denen durch Ansteuerung der Grundfarben, beispielsweise rot, gelb, blau bei dreifarbigen Leuchtdioden, mit unterschiedlicher Intensität eine Farbmischung des insgesamt von der Leuchtdiode emittierten Lichts erreicht wird, sind an sich bekannt. Somit können alle Farben oder ein Teilbereich des sichtbaren Spektrums realisiert werden.

Es kann vorgesehen sein, dass der Drehsteller eine Oberflächenbeleuchtung, insbesondere eine Koronabeleuchtung aufweist. Durch Drehung des Bedienknopfes in eine bestimmte Position wird eine zugeordnete Funktion ausgewählt. Durch die Korona-Beleuchtung, die die Kontur des Bedienknopfes nachbildet und den Knopf umgibt, ist der Drehsteller auch bei Dunkelheit leicht auffindbar.

Gemäß einer weiteren Ausgestaltung der Erfindung ist vorgesehen, dass der Drehsteller zum An- oder Auswählen verschiedener Steuermodule in unterschiedlichen Ebenen axial verschiebbar ist. Mit anderen Worten kann der Drehsteller parallel zu seiner Drehachse verschiebbar sein, beispielsweise nach oben oder unten. Auf diese Weise können durch Verschiebung des Drehstellers in unterschiedliche Ebenen weitere auszuwählende Funktionen, d.h. Auswahlmenus auf einfach Weise realisiert werden.

In den unterschiedlichen Ebenen können Rastpositionen für den Drehsteller vorgesehen sein. Insbesondere ist es denkbar, dass in den unterschiedlichen Ebenen eine verschiedene Anzahl an Rastpositionen vorgesehen sein kann. Beispielsweise können in einer Ebene 12 Rastpositionen für die Gangwahl und in einer anderen Ebene 36 Rastpositionen für eine Feinauflösung, beispielsweise bei einem Navigationssystem vorgesehen sein.

Denkbar ist auch, dass die Rastierung simuliert wird, beispielsweise durch haptisches Feedback mit unterschiedlichen Raststufen. Die Rastpositionen lassen sich mechanisch oder elektromagnetisch erzeugen und bieten dem Nutzer eine haptische Rückmeldung für eine Änderung der Einstellung des Drehstellers. Zudem sind die Drehsteller mit oder ohne Anschläge (Drehwinkelbegrenzung) ausführbar. Das haptische Feedback kann magnetisch und/oder durch Vibrationen mit Vibrationsmotoren und/oder Aktuatoren, beispielsweise Linearaktuatoren, realisiert werden.

Drehsteller können mit einem axialen Freiheitsgrad ausgebildet sein, d.h. das der Drehsteller entlang der Drehachse verschiebbar ist und allen oder einzelnen Positionen des Drehknopfs entlang der Drehachse verschiedenen Aktionen zugeordnet werden können.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Dabei zeigen zum Teil schematisch:
- Figur 1: eine als Lenkrad eines Fahrzeugs ausgebildete Lenkhandhabe mit Bedienelementen,
- Figur 2: unterschiedliche Wählpositionen des Bedienelements,
- Figur 3: eine weitere Ausführungsform des Lenkrads gemäß Figur 1,
- Figur 4: unterschiedliche Wählpositionen des Bedienelements gemäß Figur 3 und
- Figur 5: eine beispielhafte Darstellung einer Menustruktur.

Gleiche oder gleichwirkende Bauteile werden in den nachfolgend dargestellten Figuren der Zeichnung anhand einer Ausführungsform mit Bezugszeichen versehen, um die Lesbarkeit zu verbessern.

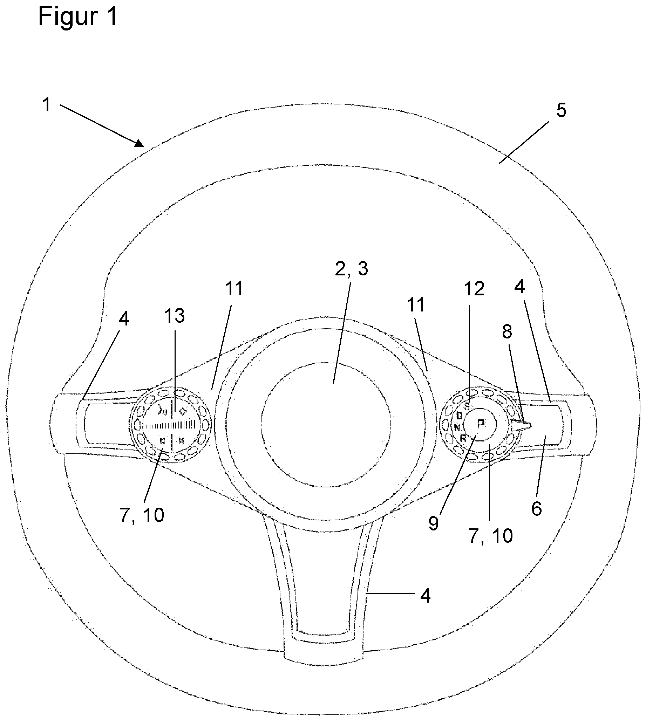

Figur 1 zeigt eine als Lenkrad 1 ausgebildete Lenkhandhabe zum Steuern eines Kraftfahrzeugs mit einer Nabe 2 zur Verbindung mit einer Lenkachse 3 des Fahrzeugs.

Ein Griffbereich 5, an welchem ein Bediener des Fahrzeugs angreift, ist vorliegend über Stege 4 bzw. Speichen mit der Nabe 2 des Lenkrads verbunden.

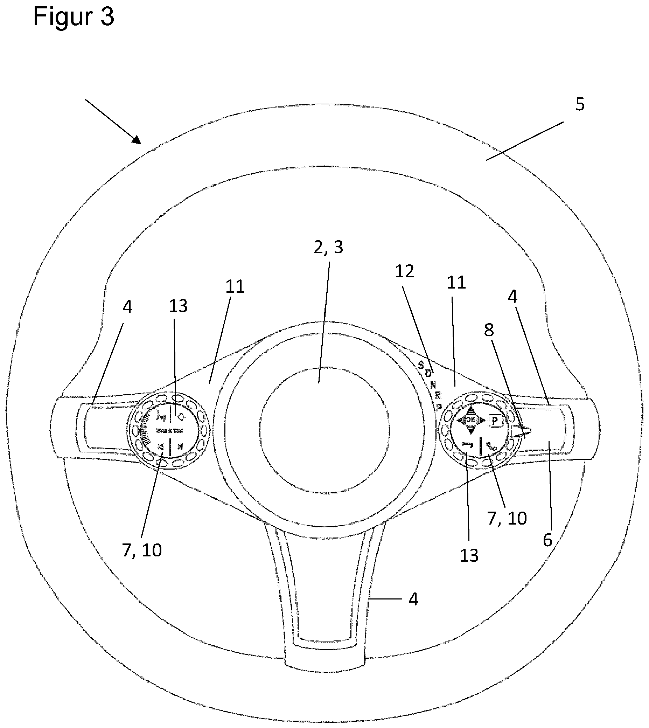

Aus Figur 1 und Figur 3 gehen jeweils Bedieneinheiten 7 hervor, welche im Bereich zwischen Nabe 2 und Griffbereich 5 der Lenkhandhabe 1 angeordnet sind.

Diese Bedieneinheiten 7 sind als Drehsteller 10 zum Anwählen unterschiedlicher Wählpositionen ausgebildet, wobei den einzelnen Wählpositionen unterschiedliche Funktionen des Drehstellers 10 zugeordnet sind.

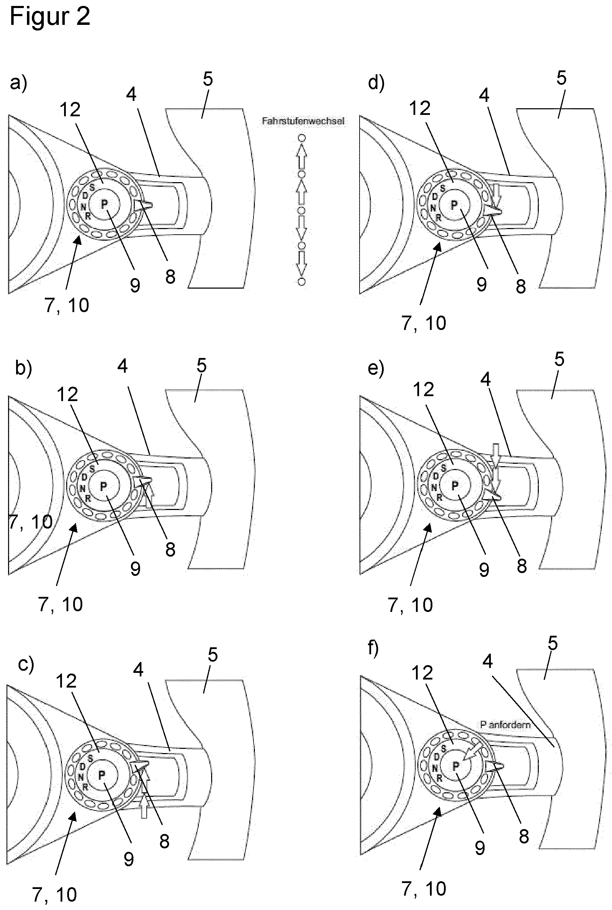

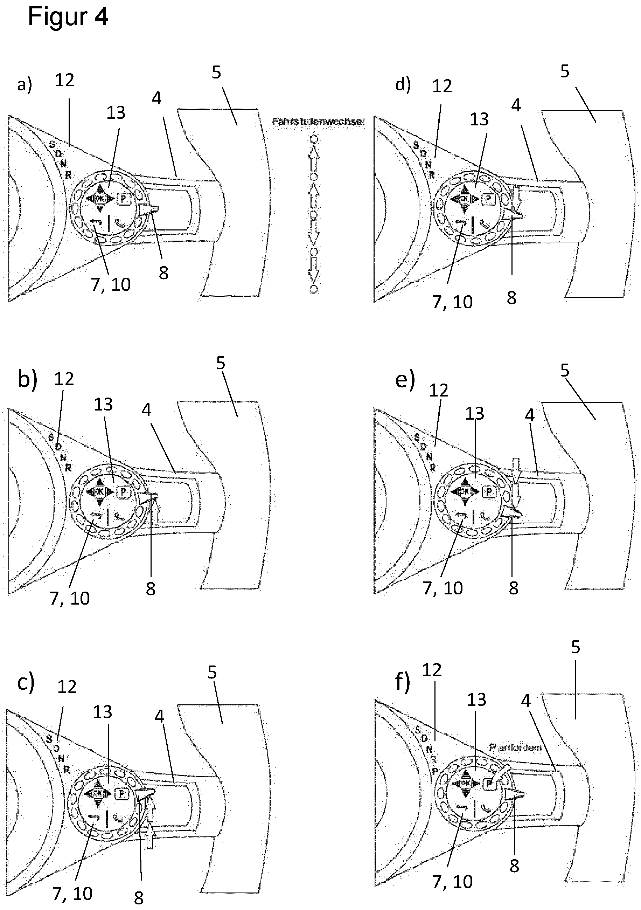

Figur 2 und auch Figur 4 zeigen in den jeweiligen Teilabbildungen a) bis f) derartige Wählpositionen.

Im Ausführungsbeispiel gemäß Figur 1 und Figur 3 sind jeweils zwei Drehsteller 10 dargestellt, welche etwa diametral gegenüberliegend auf beiden Seiten der Nabe 2 des Lenkrads 1 angeordnet sind.

Vorliegend ist gemäß Figur 1 einer der Drehsteller 10, nämlich der rechts der Nabe 2 angeordnete Drehsteller 10, zum Anwählen unterschiedlicher Fahrstufen (P, R, N, D) ausgebildet. Die Drehbewegung des Drehstellers 10 dient zur Anwahl der jeweiligen Fahrstufe (P, R, N, D).

Die Bedieneinheiten 7 bzw. die Drehsteller 10 sind vorliegend an der Nabe 2 bzw. an dem die Nabe 2 mit dem Griffbereich 5 verbindenden Steg 4 angeordnet.

Für eine einfache und intuitive Bedienung des Drehstellers 10 weist der Steg 4 bzw. die Speiche eine Aussparung 6 auf, im Bereich welcher ein Betätigungselement 8 des Drehstellers 10 zu liegen kommt. Durch Betätigung des Betätigungselements 8 wird der Drehsteller 10 in eine Drehbewegung zum Anwählen der unterschiedlichen Wählpositionen versetzt.

Vorliegend ist das Betätigungselement 8 als gegenüber dem Drehsteller 10 nach außen abstehender bzw. hervorstehender Hebel ausgebildet, mittels welchem der Drehsteller 10 in Rotationsbewegung gebracht wird, beispielsweise zum Anwählen der Fahrstufen (P, R, N, D). Der Hebel 8 ist vorliegend im Bereich der Aussparung 6 angeordnet, damit dieser einfach und intuitiv bedienbar ist.

Wie aus Figuren 2 und 4 ersichtlich ist, werden die Fahrstufen gewechselt, indem der Hebel in Richtung nach oben oder nach unten betätigt wird, so dass das Drehelement 10 in eine entsprechende Drehbewegung versetzt wird, so dass in Folge dessen die gewünschte Fahrstufe (P, R, N, D) ausgewählt und eingelegt wird.

Es ist denkbar, dass der Hebel 8 federbelastet in einer monostabilen Position angeordnet ist, so dass er nach Betätigung in seine ursprüngliche Position zurückkehrt. Denkbar ist es aber auch, dass der Hebel 8 in der ausgelenkten Position verrastet.

Vorliegend ist ein etwa zentrisch im Drehsteller 10 angeordneter Bedienknopf 9 zum Bestätigen der Parksperre in P-Stellung des Drehstellers 10 vorgesehen. Dieser vorzugsweise als Drückknopf ausgebildete Bedienknopf 9 dient zum Einlegen der Parksperre.

Durch Betätigen des Bedienknopfes 9 wird über das elektrische Fahrzeugnetz das Signal zum Einlegen der Parksperre (P) an den Parksperrenaktuator übermittelt und die Betätigung des Parksperrenaktuators am Getriebe ausgelöst. Damit wird das Getriebe mechanisch gesperrt und ein Wegrollen des Fahrzeugs wird verhindert, beispielsweise wenn der Fahrer das Fahrzeug bei laufendem Motor verlässt.

Zur Visualisierung der einzelnen Fahrstufen (P, R, N, D) ist gemäß Figur 1 in einem der Drehsteller 10 eine Anzeigeeinrichtung 12 angeordnet.

In der Ausführungsform gemäß Figur 3 ist eine solche Anzeigeeinrichtung 12 im Anschlussbereich 11 an die Nabe 2 vorgesehen.

Bei der Ausführungsform gemäß Figuren 1 und 2 ist beidseitig der Nabe 2 jeweils ein Drehsteller 10 angeordnet. Der auf der linken Seite der Darstellung gemäß Figur 1 dargestellte Drehsteller 10 weist ein Display 13 mit einer berührungssensitiven Oberfläche zur Anwahl weiterer Bedienfunktionen des Fahrzeugs auf.

Bei der Ausführungsform gemäß Figuren 3 und 4 sind die auf beiden Seiten der Nabe 2 vorgesehenen Drehsteller 10 mit einem Display 13 ausgestattet. Bei der berührungssensitiven Oberfläche des Displays 10 kann es sich um einen Touchscreen handeln, der eine Fläche mit einer Vielzahl verschiedener Bedienfelder aufweist, denen jeweils zumindest eine Steuerfunktion zugeordnet ist. Über den Touchscreen können zusätzliche Funktionen bedient werden. Bei den über das Display 10 aus- oder anzuwählenden Funktionen kann es sich um ein Telefonmodul, ein Infotainmentsystem, ein Navigationssystem oder ein Element zur Bestätigung einer Eingabe handeln.

Gemäß einer nicht dargestellten Ausführungsform kann wenigstens ein Drehsteller 10 zum An- oder Auswählen verschiedener Steuermodule in unterschiedlichen Ebenen axial verschiebbar sein. In den unterschiedlichen Ebenen können Rastpositionen für den Drehsteller 10 vorgesehen sein, welche eine verschiedene Anzahl an Rastpositionen aufweisen können.

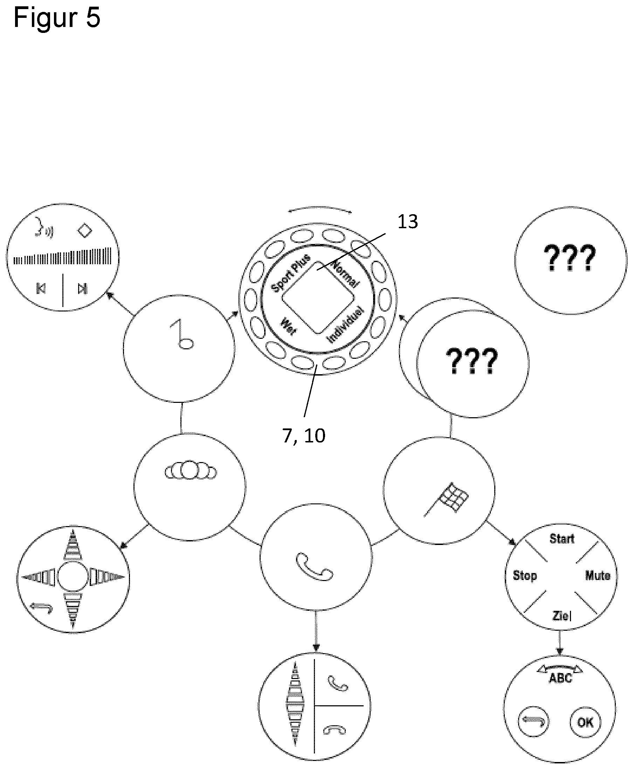

In Figur 5 ist beispielhaft ein Bedienmenü dargestellt. Hierbei weist der Drehsteller 10 das Display 13 auf, welches vorliegend frei programmierbar ausgebildet sein kann. Wie Figur 5 weiter zeigt, ist auf dem Display ein Bedienmenü angezeigt, welches die Funktionen auflistet, die mit dem Drehsteller beispielsweise durch Drehen desselben ausgewählt werden können.

Dies ist sehr vorteilhaft, da der Benutzer insbesondere direkt im Zentrum des Drehstellers das Display im Blick hat. Dadurch kann er beim Drehen des Drehstellers die sich ändernde Anzeige des Displays beobachten und muss seinen Blick nicht abschweifen lassen, um zu verfolgen, welche Auswirkungen das Bedienen des Drehstellers auf ein Kraftfahrzeug hat.

Die vorzugsweise berührungssensitive Oberfläche des Displays 13 kann vorliegend ein Touchscreen sein, der eine Fläche mit einer Vielzahl verschiedener Bedienfelder aufweist, denen jeweils zumindest eine Steuerfunktion zugeordnet ist. Über den Touchscreen können zusätzliche Funktionen bedient werden.

Bei den über das Display aus- oder anzuwählenden Funktionen kann es sich um ein Telefonmodul, ein Infotainmentsystem, ein Navigationssystem oder ein Element zur Bestätigung einer Eingabe handeln, wie Figur 5 zeigt.

### Bezugszeichenliste

- 1: Lenkhandhabe
- 2: Nabe
- 3: Lenkachse
- 4: Steg, Speiche
- 5: Griffbereich
- 6: Aussparung Speiche
- 7: Bedieneinheit
- 8: Betätigungselement
- 9: Bedienknopf
- 10: Drehsteller
- 11: Anschlussbereich an die Nabe
- 12: Anzeigeeinrichtung
- 13: Display

## Patentansprüche

1. Lenkhandhabe (1) zum Steuern eines Kraftfahrzeugs, insbesondere Lenkrad, mit einer Nabe (2) zur Verbindung mit einer Lenkachse (3) des Fahrzeugs und einem über mindestens einen als Speiche ausgebildeten Steg (4) verbundenen Griffbereich (5) und mit mindestens einer Bedieneinheit (7), wobei die Bedieneinheit (7) zwischen Nabe (2) und Griffbereich (5) der Lenkhandhabe (1) angeordnet und als Drehsteller (10) zum Anwählen unterschiedlicher Wählpositionen ausgebildet ist, wobei den einzelnen Wählpositionen unterschiedliche Funktionen des Drehstellers (10) zugeordnet sind, **dadurch gekennzeichnet, dass** der Steg (4) eine Aussparung (6) aufweist, im Bereich welcher ein als nach außen abstehender bzw. hervorstehender Hebel ausgebildetes Betätigungselement (8) des Drehstellers (10) zu liegen kommt.

2. Lenkhandhabe (1) nach Anspruch 1, **dadurch gekennzeichnet, dass** wenigstens ein Drehsteller (10) zum Anwählen unterschiedlicher Fahrstufen (P, R, N, D) ausgebildet ist, wobei die Drehbewegung des Drehstellers (10) zur Anwahl der jeweiligen Fahrstufe (P, R, N, D) dient.

3. Lenkhandhabe (1) nach Anspruch 1, **dadurch gekennzeichnet, dass** die Bedieneinheit (7) an der Nabe (2) oder an dem die Nabe (2) mit dem Griffbereich (5) verbindenden Steg (4) angeordnet ist.

4. Lenkhandhabe (1) nach Anspruch 1 bis 3, **dadurch gekennzeichnet, dass** wenigstens ein Drehsteller (10) einen, vorzugsweise zentrisch im Drehsteller (10) angeordneten Bedienknopfes (9) zum Bestätigen der Parksperre in P-Stellung des Drehstellers (10) aufweist.

5. Lenkhandhabe (1) nach einem der vorherigen Ansprüche, **dadurch gekennzeichnet, dass** in wenigstens einem Drehsteller (10) und/oder im Anschlussbereich (11) an die Nabe (2) eine Anzeigeeinrichtung (12) zur Visualisierung der einzelnen Fahrstufen (P, R, N, D) vorgesehen ist.

6. Lenkhandhabe (1) nach einem der vorherigen Ansprüche, **dadurch gekennzeichnet, dass** wenigstens ein Drehsteller (10) ein Display (13), vorzugsweise mit einer berührungssensitiven Oberfläche zur Anwahl weiterer Bedienfunktionen des Fahrzeugs aufweist.

7. Lenkhandhabe (1) nach einem der vorherigen Ansprüche, **dadurch gekennzeichnet, dass** wenigstens ein Drehsteller (10) zum An- oder Auswählen verschiedener Steuermodule in unterschiedlichen Ebenen axial verschiebbar ist.

8. Lenkhandhabe (1) nach Anspruch 7, **dadurch gekennzeichnet, dass** in den unterschiedlichen Ebenen Rastpositionen für den Drehsteller (10) vorgesehen sind.

9. Lenkhandhabe (1) nach Anspruch 7 oder 8, **dadurch gekennzeichnet, dass** in den unterschiedlichen Ebenen eine verschiedene Anzahl an Rastpositionen vorgesehen sind.

## Claims

1. Steering handle (1) for controlling a motor vehicle, in particular steering wheel, with a hub (2) for connecting to a steering shaft (3) of the vehicle and a grip region (5) connected via at least one spoke-shaped web (4), and with at least one operating unit (7), wherein the operating unit (7) is arranged between the hub (2) and the grip region (5) of the steering handle (1) and is formed as a rotary actuator (10) for selecting different selection positions, wherein the individual selection positions are assigned different functions of the rotary actuator (10), **characterized in that** the web (4) has a cut-out (6), in the region in which an actuating element (8) of the rotary actuator (10) is formed as an outwardly projecting or protruding lever.

2. Steering handle (1) according to Claim 1, **characterized in that** at least one rotary actuator (10) is designed for selecting different drive positions (P, R, N, D), wherein the rotary movement of the rotary actuator (10) serves for selecting the respective drive position (P, R, N, D).

3. Steering handle (1) according to Claim 1, **characterized in that** the operating unit (7) is arranged on the hub (2) or on the web (4) connecting the hub (2) to the grip region (5).

4. Steering handle (1) according to Claims 1 to 3, **characterized in that** at least one rotary actuator (10) has an operating button (9), preferably arranged centrally in the rotary actuator (10), for confirming the parking lock in the P position of the rotary actuator (10).

5. Steering handle (1) according to any one of the preceding claims, **characterized in that** a display device (12) for visualizing the individual drive positions (P, R, N, D) is provided in at least one rotary actuator (10) and/or in the connection region (11) to the hub (2).

6. Steering handle (1) according to any one of the preceding claims, **characterized in that** at least one rotary actuator (10) has a display (13), preferably with a touch-sensitive surface for selecting further operating functions of the vehicle.

7. Steering handle (1) according to any one of the preceding claims, **characterized in that** at least one rotary actuator (10) is axially displaceable in different planes for calling up or selecting different control modules.

8. Steering handle (1) according to Claim 7, **characterized in that** latching positions for the rotary actuator (10) are provided in the different planes.

9. Steering handle (1) according to Claim 7 or 8, **characterized in that** a different number of latching positions are provided in the different planes.

## Revendications

1. Manette de direction (1) pour le pilotage d'un véhicule automobile, en particulier volant de direction, présentant un moyeu (2) pour la liaison avec un essieu de direction (3) du véhicule et une zone de préhension (5) reliée par l'intermédiaire d'au moins une traverse (4) réalisée comme un rayon et comportant au moins unité de commande (7), l'unité de commande (7) étant agencée entre le moyeu (2) et la zone de préhension (5) de la manette de direction (1) et réalisée en tant qu'actionneur rotatif (10) pour la sélection de différentes positions, les différentes positions sélectionnées étant associées à différentes fonctions de l'actionneur rotatif (10), **caractérisée en ce que** la traverse (4) présente un évidement (6) dans la zone duquel un élément d'actionnement (8) de l'actionneur rotatif (10) réalisé sous forme de levier faisant saillie ou, selon le cas, proéminent, vient se placer.

2. Manette de direction (1) selon la revendication 1, **caractérisée en ce qu'**au moins un actionneur rotatif (10) est conçu pour la sélection de différents rapports (P, R, N, D), le mouvement de rotation de l'actionneur rotatif (10) servant à sélectionner le rapport (P, R, N, D) respectif.

3. Manette de direction (1) selon la revendication 1, **caractérisée en ce que** l'unité de commande (7) est agencée sur le moyeu (2) ou sur la traverse (4) reliant le moyeu (2) à la zone de préhension (5).

4. Manette de direction (1) selon la revendication 1 à 3, **caractérisée en ce qu'**au moins un actionneur rotatif (10) présente un bouton de commande (9), de préférence agencé au centre de l'actionneur rotatif (10), pour la confirmation du frein de stationnement dans la position P de l'actionneur rotatif (10).

5. Manette de direction (1) selon l'une des revendications précédentes, **caractérisée en ce qu'**un système d'affichage (12), destiné à visualiser les différents rapports (P, R, N, D), est prévu dans au moins un actionneur rotatif (10) et/ou dans la zone de raccordement (11) au moyeu (2).

6. Manette de direction (1) selon l'une des revendications précédentes, **caractérisée en ce qu'**au moins un actionneur rotatif (10) présente un affichage (13), de préférence pourvu d'une surface sensible au toucher, pour la sélection d'autres fonctions de commande du véhicule.

7. Manette de direction (1) selon l'une des revendications précédentes, **caractérisée en ce qu'**au moins un actionneur rotatif (10) peut coulisser axialement dans différents plans pour sélectionner ou appeler différents modules de commande.

8. Manette de direction (1) selon la revendication 7, **caractérisée en ce que** des positions d'encliquetage pour l'actionneur rotatif (10) sont prévues dans les différents plans.

9. Manette de direction (1) selon la revendication 7 ou 8, **caractérisée en ce qu'**un nombre différent de positions d'encliquetage sont prévues dans les différents plans.
